# EUROPÄISCHE PATENTSCHRIFT

(11) **EP 1 354 134 B1**
(45) Veröffentlichungstag und Bekanntmachung des Hinweises auf die Patenterteilung: **14.10.2009**
(21) Anmeldenummer: 02719704.5
(22) Anmeldetag: 17.01.2002
(51) Int. Cl.: F03D 3/04

(54) **VERFAHREN UND VORRICHTUNG ZUR FLUIDKRAFTNUTZUNG**
METHOD AND DEVICE FOR EXPLOITING A FLUIDIC FORCE
PROCEDE ET DISPOSITIF D'EXPLOITATION D'UNE FORCE FLUIDIQUE

(30) Priorität: 17.01.2001 DE 10102672
(43) Veröffentlichungstag der Anmeldung: 22.10.2003
(73) Patentinhaber: SCHATZ, Jürgen, D-10365 Berlin (DE)
(72) Erfinder: SCHATZ, Jürgen, D-10365 Berlin (DE)
(74) Vertreter: Hengelhaupt, Jürgen
(86) Internationale Anmeldenummer: PCT/EP2002/000458
(87) Internationale Veröffentlichungsnummer: WO 2002/061276

(56) Entgegenhaltungen:
- EP-A- 0 077 698
- WO-A-97/02431
- DE-A- 2 920 243
- DE-A- 19 548 637
- DE-A- 19 623 313
- DE-A- 19 628 509
- DE-A- 19 633 682
- DE-A- 19 646 543
- DE-U- 9 415 787
- US-A- 4 452 562
- US-A- 5 478 197

## Beschreibung

Die Erfindung bezieht sich auf ein Verfahren zur mehrfachen Konzentration, Speicherung und zur energetischen Nutzung von Fluidkräften, wobei in einer oder mehreren Ebenen einer Parallelströmung Strömungsenergie in Wirbeln und Wirbelströmungen geschwindigkeits- und massenkonzentriert wird. Durch Fortleitung von konzentrierter Strömungsenergie zu kleineren Wirkungsräumen wird die energetische Nutzung in technischen Einrichtungen zu verschiedenen Anwendungszwecken wirtschaftlicher gestaltet.

Beispielsweise zur Windenergienutzung werden zur Fluidkraftnutzung in Strömungsmodulen erzeugte Drehströmungen eingesetzt. Strömungsmodule können gleiche oder unterschiedliche Funktionen bei der Nutzung der Fluidkraft haben. Die Strömungsmodule weisen Einström- und Ausströmöffnungen sowie mittige Durchströmöffnungen auf. In einem Strömungsmodul ist ein antreibender Potentialwirbel hergestellt, in dessen Wirbelkern eine Turbine angetrieben wird. Eine Turbine ist auf einer Generatorwelle angeordnet. In einem Vertikalachsen-Hohlkörper-Rotor werden bei Abbremsung durch Energieaustrag Wirbelströmungen generiert. In einem anderen Strömungsmodul ist ein expandierender Potentialwirbel generiert, der nach der Kontinuitätsbedingung aus dem Unterdruckkern des antreibenden Potentialwirbels und aufgrund des Entropieverhaltens der Atmosphäre, einen Massestrom abzieht. Mit Anwendung des Verfahrens wird eine Erhöhung der Umfangsgeschwindigkeiten des antreibenden Potentialwirbels unter Last erreicht, es können größere Masseströme durch das Wirbelsystem durchgesetzt werden. Die Lastkennlinie des Rotors wird annähernd kongruent zu einer Generatorkennlinie eingestellt. Es resultiert ein stabiles Leerlauf-Lastverhalten des Rotors.

Aus der DE-Zeitschrift Sonnenenergie 2/84 ist die Theorie der Strömungsenergiekonzentration, aus der DE-PS 33 30 899 eine Anordnung zur Konzentration von Strömungsenergie bekannt.

Das Strömungsfeld um einen beliebig geformten Wirbelfaden und das elektrotechnische Feld um einen beliebig gebogenen, drahtförmigen Leiter werden durch den gleichen Zusammenhang beschrieben: das Biot-Savartsche Gesetz. Wickelt man einen Wirbelfaden mit der Induktion Γ zu einer Spule auf, kommt es zu einer Konzentration von Geschwindigkeit über der Wickelachse. Die Zusatzgeschwindigkeit V_{z} ergibt sich aus der Beziehung V_{z} = Γ*n/1, wobei n die Wirbelzahl und 1 die Spulenlänge in Metern analog zur Elektrotechnik sind. Werden Wirbel an sternförmig schräg aufgestellten Tragflügeln generiert, entstehen der Tragflügeltheorie entsprechende Randwirbel, welche durch Eigeninduktion stromab eine Doppelwirbelschichtspule bilden. Man kann auf diese Weise mehrere Wirbelfäden zu einem mehrgängigen Wirbelspulen-Konzentrator aufwickeln. Erstmals wurde nachgewiesen, daß aus einer Druckdifferenz zum statischer Druck der Atmosphäre mit technischen Systemen partiell direkt in kinetische Energie gewandelt werden kann. Alle Vorgänge sind in einer Parallelströmung mit in dieser partiellen Ordnung strömenden Masseteilchen nachvollziehbar. Es können getriebelose Anlagen zur Nutzung der erzeugten Kernströmung errichtet werden.
Strömungsenergie wird direkt genutzt, die Pulsation des Windes wirkt in senkrechter Anströmung schwingungserzeugend und damit nachteilig auf den Konzentrator. Die Konzentratorfläche wird größer als die projizierte Anströmfläche freifahrender Windräder vergleichbarer Leistung. Eine wirtschaftliche Nutzung wurde nicht bekannt.

Aus der WO 92/ 21878 (& US-A-5 478 197) ist ein Verfahren zur Herstellung einer dynamischen Wirbelspule bekannt, wie im Oberbegriff des Anspruchs 1 dargestellt, wobei in einem Strömungsmodul aus einem Potentialwirbel mittels ortsfester oder rotierender Wirbelerzeuger Wirbelströmungen generiert und danach innerhalb des Strömungsmoduls in der Hauptströmung zu einer induzierenden Wirbelspule aufgewickelt werden. Es resultiert ein leistungsstabiles Verhalten einer Turbine, die nach diesem Verfahren arbeitet. Die Drehzahlkennlinien sind linearisiert, die Leistungskennlinie ist einer Generatorkennlinie angepaßt. Problematisch ist die erzielbare Leistung, da sie direkt vom durchgesetzten Volumenstrom abhängt. Es sind Verstärkungen des Volumenstromes vorgeschlagen, die jedoch in nur einer strömungsmechanischen Variante nutzbar wurden.

Weiter ist ein Verfahren vorgeschlagen, wonach in mehreren Ebenen einer oder mehrerer, quadratischer und/oder rechteckiger Anströmflächen parallele Wirbel generiert und Geschwindigkeitskonzentrationen unter Anströmdruck in Wirbelerzeugern hergestellt werden. Die Übertragung der in der Parallelströmung in Wirbelröhren geschwindigkeitskonzentrierten Strömungsenergie erfolgt durch Wirbelstreckungen. Zugleich wird unter Anströmdruck Drehimpuls in Zwangsströmungsräume eingeleitet und Wirbel gleicher Drehrichtung generiert, in welche in der Parallelströmung hergestellte Wirbelröhren gleicher Drehrichtung unter Überdruck in die Unterdruckkerne implantiert und parallele Hauptströmungen hergestellt werden, in denen die implantierten Wirbelröhren zu Wirbelrohren fließen und in Drehströmungen eingelagert werden. Sie fließen über äußeren Mantelflächen von Saugrohren, die Reaktionskräfte formieren sie zu mehrgängigen Wirbelschrauben. Am Ende der Saugrohre gehen sie in freie Strömungsräume der Wirbelrohre über und werden zu mehrgängigen, induzierenden Wirbelspulen, die Masseströme in den Saugrohren hervorrufen. Die Anzahl der formierten Wirbel geht proportional in die induzierte Zusatzgeschwindigkeit ein und bestimmt wesentlich die Leistungsfähigkeit dieser Wirbelspulen.

Über die Saugrohre werden Masseströme aus den antreibenden Potentialwirbeln abgezogen.

Nach dem vorgeschlagenen Verfahren ist es möglich, auf größeren Anströmflächen die mittlere Energie einer Anströmung in einer Vielzahl von Geschwindigkeitskonzentrationen in Wirbelröhren mit hoher Stabilität in höhere und niedere Energieniveaus in und an einer Vorrrichtung zu disproportionieren. Die auf der Anströmseite konzentrierte Energie bildet ein nutzbares Potential in und an der Vorrichtung. Der Flächenausnutzungsgrad in der ersten Stufe der Disproportionierung steigt wesentlich. Die zweite Stufe der Disproportionierung besteht in der Herstellung von Wirbelspulen durch räumliche Konzentrationen der Wirbelröhren, welche Zusatzgeschwindigkeiten induzieren und Saugzüge in Rohrleitungen hervorrufen. Die dritte Stufe der Disproportionierung wird in Potentialwirbeln durch Anschluß von Saugzügen an deren Unterdruckkerne hergestellt, in deren Wirbelkernen Turbinen angetrieben werden. Verfahrensgemäß kann nun auch die Geschwindigkeit auf äußeren Radien dieser Potentialwirbel und damit deren Speicherfähigkeit an kinetischer Energie eingestellt werden. Die Potentialwirbel sind zugleich strömungsmechanische Getriebe und Arbeitsspeicher mit stationären Strömungsprozessen.
In einem derartigen Wirbelsytem einer Vorrichtung sind die gewünschten Masseströme stufenweise und stufenlos einstellbar.
Insbesondere kann die Anwendung des Verfahrens mehrfach in Baugruppen und Modulen einer Vorrichtung erfolgen. Die hergestellten Saugzüge lassen sich auf einen größeren Saugzug in der Vorrichtung konzentrieren, so daß auf diese Weise die gewünschten, nutzbaren Massenströme mit höheren Geschwindigkeiten hergestellt werden können.

Es können auch bei Dauerbetrieb der Vorrichtungen keine Umweltbeeinträchtigungen produziert werden. Lebende Arten können nicht beeinträchtigt werden.

Bei allen bekannten Verfahren und vorgeschlagenen Lösungen ist es nachteilig, dass beispielsweise in der Atmosphäre energetisch nutzbare Strömungen nur natürlicherweise existieren. Die Erzeugung von Elektroenergie ist demzufolge mit wechselndem Strömungsenergiedargebot diskontinuierlich und sehr standortabhängig.
Weiterhin ist es nachteilig, dass die mittlere Energie einer Strömungsfläche in der Atmosphäre aufgrund der geringen Dichte der Luft nach der Beziehung P_{w} = ρ/2·A·v_{w}³ (W) mit der Geschwindigkeit in der dritten Potenz zu oder abnimmt.

Der Erfindung liegt die Aufgabe zugrunde, ein Verfahren und eine Vorrichtung zu schaffen, nach welchen es möglich wird, die in jedem Fluid aufgrund der Brown'schen Molekularbewegungen vorhandenen Fluidkräfte zur kontinuierlichen Erzeugung nutzbarer Energie zu nutzen. Es ist weiterhin Aufgabe der Erfindung ein Verfahren zu schaffen, nach dem beispielsweise in der Atmosphäre oder im Wasser unabhängig von natürlichen Strömungen Elektroenergie erzeugt werden kann. Es ist auch Aufgabe der Erfindung, ein Verfahren zu schaffen, nach welchem eine Fluidkraftnutzung in Kombination mit Strömungsenergienutzung erfolgen kann, so dass die Wirtschaftlichkeit der Anwendung des Verfahrens erhöht wird. Zur Durchführung des Verfahrens soll eine Vorrichtung geschaffen werden, welche in newtonschen Fluiden eingesetzt nutzbare Energie erzeugt und eine Serienfertigung von montierbaren Baugruppen zur Erhöhung der Wirtschaftlichkeit ermöglicht.

Diese Aufgabe wird erfindungsgemäß nach dem Oberbegriff des Hauptanspruchs durch dessen kennzeichnenden Teil gelöst.

Erfindungsgemäß werden in einem Fluid auf äußeren Radien von Vorrichtungen Quellströmungen mit Senkenströmungen durch eine energetisch nutzbare strömungsmechanische Durchflutung der Vorrichtungen gekoppelt. Parallele Senkenströmungen werden in Vorrichtungen in energetisch nutzbare, parallele Drehströmungen gewandelt und Arbeit gespeichert, durch Expansion zur Quelle eingetragener Drehimpuls ausgetragen, bei Austrag nutzbarer Energie aus gespeicherter Arbeit zusätzliche Axialströme mit zusätzlichen Quellströmungen erzeugt und Geschwindigkeiten von Molekülen aus einer Grenzschicht eines Wirbelkerns zu einem Unterdruckkern freigesetzt.

Nach der Erfindung werden in Strömungsmodulen Kreisprozesse von Zustandsänderungen hervorgerufen, indem strömungsmechanisch auf außeren Radien von hohlzylinderartigen Expansionsmodulen festgemachte Quellströmungen im Fluid erzeugt werden, welche rückwirkend im Fluid Senken an strömungsmechanisch gekoppelten Leistungsmodulen hervorrufen, im Inneren von Leistungsmodulen energetisch nutzbare Arbeit in Rotation speichern, eine strömungsmechnische Durchflutung der Strömungsmodule erzeugen und im Fluid zu den hergestellten Senken fließen.

Dazu werden erfindungsgemäß in newtonschen Fluiden durch Zuführung von Energie partiell Quellen und Senken an Strömungsmodulen hergestellt und betrieben, welche im Inneren von einem oder mehreren, hohlzylinderartigen Strömungsmodulen eine strömungsmechanische Durchflutung mittels stationär arbeitenden Drehströmungen sowie Axialströmen erzeugen, zugleich in Drehströmungen kinetische Energie als Arbeit ( J = Ws ) geschwindigkeitskonzentrieren, einen rotierenden Arbeitsspeicher herstellen und aufrechterhalten und bei Energieaustrag aus dem Arbeitsspeicher einen zusätzlich erzeugten Arbeitsstrom in das Fluid abgeben.

An den Strömungsmodulen können mehrere Quellen betrieben werden, die auf eine Senke wirken. Dazu wird der von Quellen gelieferte Massenstrom strömungsmechanisch im umgebenden Fluid an den Strömungsmodulen direkt zur Senke geführt. Die einer oder mehreren Quellen zugeführte Energie hat den Betrag, der sich aus den gesamten Aufwendungen für die Bewegung der Massen im Fluid und den strömungsmechanischen Verlusten in den Strömungsmodulen ergibt.

Eine Quelle, beispielsweise zur Nutzung der Fluidkraft der Atmosphäre ein Querstromgebläse, zieht einen Massestrom auf äußeren Radien aus einem Strömungsmodul ab und ruft einen expandierenden Wirbel hervor. Der Massestrom generiert in einem anderen Teil des Strömungsmoduls oder einem anderen Strömungsmodul einen geschwindigkeitskonzentrierenden Potentialwirbel, welcher kinetische Energie nach der Beziehung Eₖᵢₙ = (Γ²ρh/4π) 1n Rₐ/Rᵢ (J = WS) speichert. Es wird ein rotierender Arbeitsspeicher hergestellt, der zugleich ein Drehfeld für eine Turbine ist. Auf äußeren Radien Rₐ wird dadurch eine Senke hervorgerufen. Die lineare Funktion der Quellströmung wird über der Zeit in eine quadratische Funktion der Speicherung kinetischer Energie überführt. Je größer der äußere Radius Rₐ der Senke ist, je größer wird die Zirkulation Γ(m²/s) und der Betrag von Γ².

Geometrisch sind Quelle und Senke vorzugsweise so an Strömungsmodulen angeordnet, dass zum Fluid eine definierte Strecke geöffnet ist, Quellen und Senke jedoch vorrangig so aufeinander wirken, dass der von den Quellen gelieferte Massenstrom direkt von der Senke aufgenommen werden kann. Auf diese Weise wird das umgebende Fluid kaum belastet, der im Fluid in Gang gesetzte Kreisprozeß zur Aufladung eines Arbeitsspeichers hat keine umweltbelastenden Rückwirkungen. Es wird ein Kreisprozeß im Betriebszustand "Leerlauf" hervorgerufen. Es entsteht die erfindungsgemäß neue Wirkung, dass die Umfangsgeschwindigkeit des erzeugten Drehfeldes und damit die Drehzahl des Generators so eingestellt und geregelt werden können, dass der Generator bei Teilleistungen und bei Nennleistung mit Nenndrehzahl arbeitet.

Erfindungsgemäß wird die Aufgabe für den Betriebszustand "Lastlauf" dadurch gelöst, dass im Arbeitsspeicher zugleich mit dem Austrag nutzbarer Energie, in Abhängigkeit vom Betrag der ausgetragenen Energie, Wirbelströmungen mit einer Zirkulation Γ generiert und, in den Wirbelkern des Potentialwirbels (Arbeitsspeicher) eingelagert, zu induzierenden Wirbelspulen aufgewickelt werden. Die induzierte Zusatzgeschwindigkeit v_{z} ist von der Anzahl der Wirbel und von dem Betrag ihrer Zirkulation Γ nach der Beziehung v_{z} = Γ·n/1 sowie vom Steigungswinkel eines mehrgängigen Schraubenwirbels abhängig. Es wird ein zusätzlicher Axialstrom im Unterdruckkern des Potentialwirbels hervorgerufen, welcher drehachsenparallel eine Ausströmöffnung mittels Anströmdruck öffnet, als Quellströmung in das umgebende Fluid ab- und zur Senke hinströmt. Die nunmehr im Inneren der Strömungsmodule resultierende Massendifferenz muß, aus Gründen der Massen- und Energieerhaltung entsprechend vᵤ R = konstant, über die Senke aus dem Entropieverhalten der Atmosphäre ausgeglichen werden, es resultiert eine Beschleunigung des Potentialwirbels, welche die Senke verstärkt.

Erfindungsgemäß entsteht die neue Wirkung, dass zur Erzeugung nutzbarer Energie durch Fluidkraftnutzung unabhängig von den Bewegungen des umgebenden Fluids ein zeitlich ununterbrochener Kreisprozeß ausgenutzt werden kann. Bezogen auf den wirtschaftlichen Ertrag in einem Jahresgang können 8760Stunden vollständig zur Erzeugung nutzbarer Energie gerechnet werden. Analog zu elektromagnetischen Induktionen sind Wirkungsgrade mit etwa 70% erreichbar. Zusätzlich kann Strömungsenergie nach bereits vorgeschlagenen Verfahren zur Erhöhung der Wirtschaftlichkeit der Energieerzeugung entsprechend dem natürlichen Dargebot genutzt werden, indem der innen erzeugte Axialstrom von außen durch zusätzliche Quellströmungen verstärkt wird.

Erfindungsgemäß entsteht auch die neue Wirkung, dass alle Prozesse der Erzeugung nutzbarer Energie vollautomatisch regelbar und an den wechselnden Energiebedarf anpassbar sind. Der Arbeitsspeicher hat eine Verstärkerfunktion, da die parallelen Senkenströmungen in Drehströmungen gewandelt und in Arbeit gespeichert werden. Arbeit ist entropiefrei und thermodynamisch Wärme unendlicher hoher Temperatur gleichwertig. Sie ist deshalb in der Formulierung des zweiten Hauptsatzes der Thermodynamik nicht enthalten. Wird aus dem Arbeitsspeicher Energie ausgetragen, dann kann der Betrag der ausgetragenen Energie sowohl durch stationäre Wirbelspulen aus dem Entropieverhalten der Atmosphäre als auch durch Erhöhung des Massenstromes der erzeugten Quellströmungen als Arbeit wieder eingetragen werden. Dazu können in einfacher Weise mehrere Quellströmungen erzeugende Fördereinrichtungen auf äußeren Radien wirken.

Besonders vorteilhaft und dringend geboten ist die Nutzung vorhandener Hochbauten nach dem erfindungsgemäßen Verfahren sowohl zur Erzeugung von Elektroenergie als auch zur Verringerung der CO₂-Produktion von Heizungsanlagen. Mit der breiten Anwendung des erfindungsgemäßen Verfahrens können sehr große Beiträge zur Verringerung der CO₂-Produktion geleistet und bestehende Umweltprobleme verringert bzw. teilweise gelöst werden. Dazu ist eine Vielzahl von Strömungsmodulen leistungsmäßig an die vorhandenen Heizungsanlagen anzupassen, so dass mit Einsatz von Elektroenergie, sowie zusätzlicher Windenergie in der Heizperiode, im Rücklauf der Heizungsanlage Wärme erzeugt wird und die vorhandenen Regelungen automatisch den Brennstoffverbrauch verringern. Ganzjährig kann die Herstellung von Gebrauchswarmwasser mit dem erfindungsgemäßen Verfahren erfolgen. Da die Heizlastkurven mit dem Windenergiedargebot im Jahresgang korrelieren, können hier mit geringen Kosten große Brennstoffeinsparungen und damit wesentliche Reduzierungen der CO₂-Produktion erzielt werden.

Das erfindungsgemäße Verfahren ist zur Wasserförderung aus Oberflächenwasser und Grundwasser beliebiger Tiefen anwendbar. Besonders die bekannten Pumpen sowie Fördereinrichtungen mit allen Nachteilen fallen weg. Das Expansionsmodul erhält zusätzlich die Funktion eines Wasserabscheiders. Die Durchströmöffnung zwischen Expansionsmodul und Leistungsmodul wir als Rohr ausgeführt, welches bis an die Wasserfläche herangeführt wird. Das Leistungsmodul wird in einem Hüllrohr über der Wasserfläche angeordnet, in welchem tangential einströmende Luft einen Arbeitsspeicher erzeugt. Der im Rohr zum Expansionsmodul aufsteigende Wirbelkern zieht eine Wasserschicht hoch, wie das bei natürlichen Wasserhosen bekannt ist. So können in einfacher Weise natürliche Druckdifferenzen der Luft genutzt werden. Der Aufwand für die Wasserförderung sinkt insgesamt. Insbesondere für Territorien ohne Infrastruktur kann das Verfahren im Einzelbetrieb von Vorrichtungen mit großer Wirtschaftlichkeit angewendet werden, da für die Erzeugung einer oder mehrerer Quellströmungen erneuerbare Energien und/oder nicht erneuerbare Energieträger einsetzbar sind.
Ein weiteres Anwendungsgebiet nach der Erfindung ist die wirtschaftliche Nutzung der Gezeitenströmungen von Meeren zur Elektroenergieerzeugung. Das Problem der für eine wirtschaftliche Nutzung zu geringen Fließgeschwindigkeiten der Gezeitenströmungen kann mit Anwendung des Verfahrens partiell einer Lösung zugeführt werden, indem in Hohlzylindern Potentialwirbel hergestellt und die für Generatoren erforderlichen Drehzahlen in Wirbelkernen erzeugt werden. Dabei sind die Strömungsmodule so anzuordnen, daß die oben von Quellen abgezogenen Massen unten tangential in die Senke der Strömungsmodule nachströmen. Auf diese Weise können sowohl Druckunterschiede im Meereswasser als auch Strömungen zur Elektroenergieerzeugung genutzt werden. Es resultieren stabile Betriebszustände der Potentialwirbel in beiden Strömungsrichtungen mit hohen Wirkungsgraden.
Ebenso können ständig vorhandene Strömungen kleinerer Fließgeschwindigkeiten einer wirtschaftlichen Nutzung zugeführt werden, ohne dass Umweltbeeinträchtigungen resultieren.
Das erfindungsgemäße Verfahren kann in allen newtonschen Fluiden realisiert werden, die genügend große Volumen aufweisen.

Die Erfindung soll nachfolgend an einem Ausführungsbeispiel näher erläutert werden. In den zugehörigen Zeichnungen zeigen:
- Fig. 1: eine Draufsicht auf eine Vorrichtung in schematischer Darstellung einer Quelle-Senke-Beziehung
- Fig. 2: eine schematische Darstellung der strömungsmechanischen Durchflutung zur Elektroenergieerzeugung
- Fig. 3: die Anwendung des Verfahrens zur Windenergienutzung in schematischer Darstellung
- Fig. 4: die Anwendung des Verfahrens zur Förderung von Wasser in schematischer Darstellung
- Fig. 5: die Anwendung des Verfahrens auf Hochbaukörpern zur Elektroenergieerzeugung

In einem Fluid werden auf äußeren Radien von Vorrichtungen Quellströmungen mit Senkenströmungen durch eine energetisch nutzbare, strömungsmechanische Durchflutung der Vorrichtungen gekoppelt.
Das Verfahren besteht in den nachfolgend näher erläuterten Verfahrensschritten. Erzeugung einer Quellströmung in einem Fluid auf äußerem Radius von hohlzylinderartigen Strömungsmodulen, Ansaugung eines Massenstromes aus einem Expansionsmodul, hervorrufen einer Senke an einer Durchströmöffnung zum Leistungsmodul, hervorrufen einer Senke auf äußerem Radius des Leistungsmoduls über einer Ansaugöffnung im Bereich der Quellströmung, Herstellung einer strömungsmechanischen Durchflutung in stationären Strömungszuständen in Strömungsmodulen.

Die strömungsmechanische Durchflutung läuft als Kreisprozeß ab und ist die Grundlage der Erzeugung nutzbarer Energie. In der strömungsmechanischen Durchflutung werden zwei Strömungszustände hergestellt. Das Volumen eines Leistungsmoduls wird durch den durch eine Ansaugöffnung einströmenden Massenstrom zur Durchströmöffnung zu einem Expansionsmodul in einem Potentialwirbel geschwindigkeitskonzentriert und ein rotierender Arbeitsspeicher hergestellt.

Der Massenstrom ist dem Arbeitsspeicher überlagert. Aus dem Arbeitsspeicher kann mittels einer Turbine Energie ausgetragen werden.

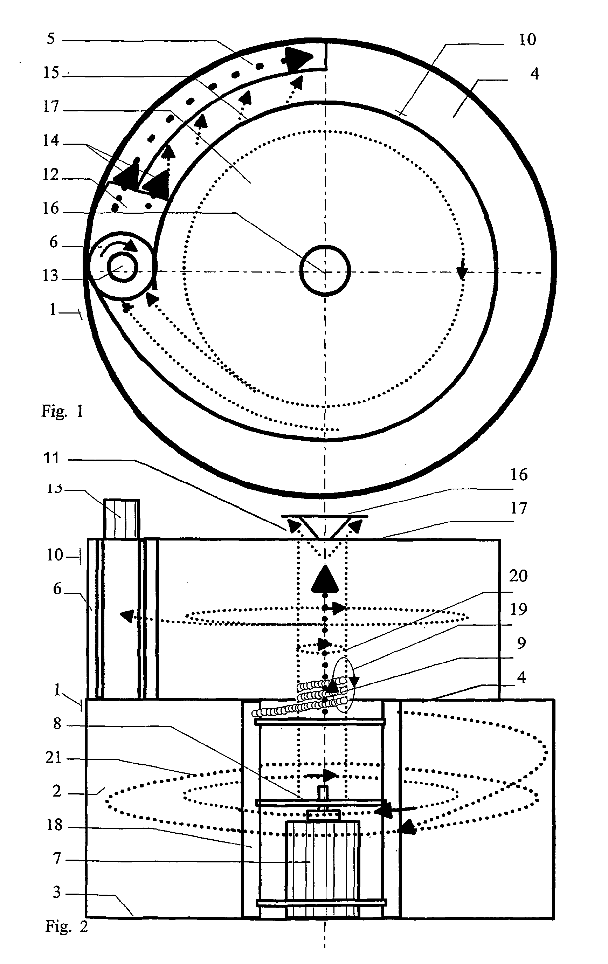

Wie in Fig. 1 dargestellt, besteht die Vorrichtung zur Durchführung des Verfahrens aus einem Leistungsmodul 1, bestehend aus einem Hohlzylinder 2 mit Grundplatte 3 und Deckplatte 4. In die Deckplatte 4 ist eine Ansaugöffnung 5 der entstehenden Senke tangential auf äußerem Radius angeordnet. Mittig ist ein Generator 7, auf dessen Welle eine Turbine befestigt ist, angeordnet. Eine mittige Durchströmöffnung 9 in der Deckplatte 4 bestimmt die Größe eines Wirbelkerns, welcher im Innenraum der Turbine 8 mit der Drehung der Turbine 8 entsteht. Auf der Deckplatte 4 ist ein Expansionsmodul 10 mit einer mittig angeordneten, regelbaren Ausströmöffnung 11 angeordnet. Auf äußerem Radius ist ein Quellkanal 12 im Bereich der darunter liegenden Ansaugöffnung des Leistungsmoduls 1 sowie eine Fördereinrichtung 13 angeordnet. Damit ist die Grundkonfiguration einer erfindungsgemäßen Vorrichtung gegeben, die in verschiedensten Formen ergänzt und dem Nutzungszweck angepasst werden kann.

Am Beispiel der Elektroenergieerzeugung in der Atmosphäre soll das erfindungsgemäße Verfahren näher erläutert werden.
Wie in Fig. 1 und 2 dargestellt, wird durch die Fördereinrichtung 13 ein Quellstrom 14 über einen Quellstromkanal 12 in die Atmosphäre abgegeben, so entsteht im Anfahrzustand über der Ansaugöffnung 5 des Leistungsmoduls 1 ein Überdruck, zugleich entsteht rückwirkend im Expansionsmodul 10 sowie im Leistungsmodul 1 Unterdruck, wobei die Unterdruckerzeugung mit Impulsgeschwindigkeit übertragen wird. Die Einströmung in das Leistungsmodul 1 erfolgt aus dem Quellstromkanal 12 an der Wand 15 des Expansionsmoduls 10 über die Ansaugöffnung 5 auf äußerem Radius, so dass Drehimpuls eingeleitet und eine parallele Drehströmung hergestellt wird. Im Leistungsmodul 1 wird ein Potentialwirbel generiert, welcher für die Turbine 8 ein Drehfeld ausbildet und zugleich Arbeit speichert. Damit wird an der Turbine 8 ein nutzbares Normpotential im Potentialwirbel hergestellt. Die höchste Umfangsgeschwindigkeit des Potentialswirbels entsteht im Innenraum der Turbine 8 im Wirbelkern.

Die Turbine 8 dreht sich mit Schlupf im Drehfeld. Leistungsmodul 1 und Expansionsmodul 10 werden strömungsmechanisch durchflutet, solange die Fördereinrichtung 13 in Betrieb ist, wobei der eingetragene Drehimpuls im Expansionsmodul wieder ausgetragen wird. Durch den Unterdruck im Expansionsmodul 10 ist das Ventil 16 in der Deckplatte 17 geschlossen. In der Atmosphäre treten keine Nebenwirkungen auf.
Wird die Turbine 8 bei Erzeugung von Elektroenergie im Drehfeld abgebremst, entsteht eine Differenzgeschwindigkeit zwischen Drehfeld und Turbinenkörper 18. In den Turbinenkörpern 18 werden Wirbelröhren generiert, welche unter der Deckplatte 4 in den Innenraum der Turbine 8 ausströmen und im Wirbelkern 20 einen mehrgängigen Schraubenwirbel 19 ausbilden. Es werden Zusatzgeschwindigkeiten induziert, ein zusätzlicher Axialstrom hervorgerufen, durch Anströmdruck des Axialstromes das Ventil 16 geöffnet und das Drehfeld über die Ansaugöffnung 5 beschleunigt.

Verfahrensgemäß werden, aus Gründen der Masse- und Energieerhaltung in einem rotierenden System, Geschwindigkeiten der Moleküle aus der Grenzschicht eines Wirbelkerns in der Turbine 8 zum Unterdruckkern im Leistungsmodul 1 freigesetzt. Das kann die Umfangsgeschwindigkeit sein, es kann aber auch thermische Geschwindigkeit der Moleküle freigesetzt werden. Maßgebend ist hier der Betrag des Energieaustrags durch die Turbine 8 und die pro Zeiteinheit aus dem Unterdruckkern abgezogene Masse. Diese Masse muß im Wirbelsystem erhalten werden. Zwischen der rotierenden Grenzschicht des Arbeitsspeichers und der Senke über der Durchströmöffnung 9 entsteht eine hochfrequente Oszillation. Die Moleküle springen aus einer höheren Ordnung der Rotation in die niedere Ordnung eines Axialstromes. Der negative Rückimpuls des Sprunges löst den nächsten Sprung aus. Es resultiert eine mittlere Strömungsgeschwindigkeit im Axialstrom. Die Moleküle fliegen durch die Sprünge parallel in gleicher Richtung, so dass sich der strömungsmechanische Widerstand in dieser Fließstrecke verringert.

Da die Leistung P (W) des Generators 7 das Produkt von Drehmoment und Winkelgeschwindigkeit ist, sind die Umfangsgeschwindigkeit des Potentialwirbels an der Turbine und der Turbinenradius leistungsbestimmende Größen analog zur Regel der Mechanik, wonach die Länge des Hebels die notwendige Kraft bestimmt. Es findet bei der Erzeugung von Elektroenergie eine Verstärkung der Fluidkraft statt.

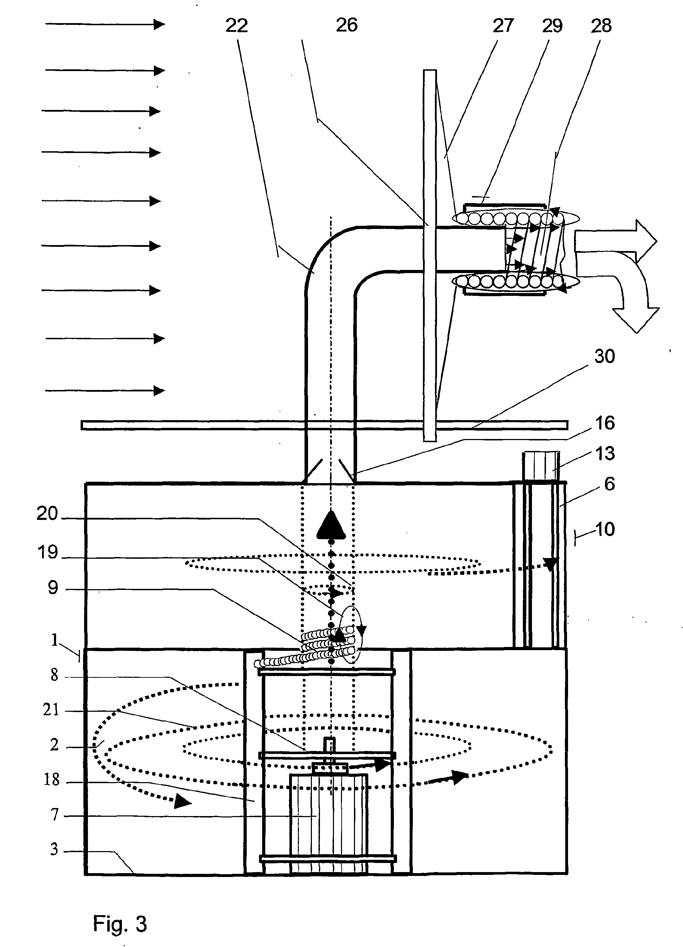

Eine weitere Anwendung des erfindungsgemäßen Verfahrens ist in Fig. 3 dargestellt. Das erfindungsgemäße Verfahren wird mit Verfahren zur Konzentration von Strömungenergie, Transformation konzentrierter Strömungsenergie in Wirbeltriebwerke 29 zur Herstellung von induzierenden, stationären, mehrgängigen Schraubenwirbeln 28 in einfacher Weise kombiniert, wobei das vorbeschriebene Verfahren unverändert wirksam ist. Dazu wird in einem nicht dargestellten Tragwerk ein Drehkranz 30 angeordnet, welcher einen Konzentrator 26 über 360° durch Winddruck nachfürbar trägt. Im Konzentrator 26 werden Wirbelröhren erzeugt, welche über den Transformator 27 in das Wirbeltriebwerk 29 transformiert zu einem mehrgängigen Schraubenwirbel 28 formiert werden. Es resultiert eine Ladung am Saugrohr 22, welche am Saugrohrende im Wirbebeltriebwerk 29 einen Pluspol hervorruft. Der mehrgängige Schraubenwirbel 28 induziert eine Zusatzgeschwindigkeit, welche das Saugrohr 22 evakuiert, wobei der Unterdruckimpuls mit Impulsgeschwindigkeit bis zur Ansaugöffnung 5 des Leistungsmoduls 1 übertragen wird. Zusätzlich zur strömungsmechanischen Durchflutung von Leistungsmodul 1 und Expansionsmodul 10 wird ein Arbeitsstrom aus dem Leistungsmodul 1 abgezogen. Es entsteht eine hochfrequente Oszillation zwischen dem mehrgängigen Schraubenwirbel 28 und dem Leistungsmodul 1, die nur von der Umfangsgeschwindigkeit der Wirbelröhren im Wirbeltriebwerk 29 abhängt. Der Generator 7 kann eine höhere Leistung abgeben oder die Fördereinrichtung 13 kann heruntergeregelt werden. Entsprechend der Auslegung der Steuerung bzw. der Regelungen kann die Wirtschaftlichkeit der Anwendung der erfindungsgemäßen Verfahren wesentlich erhöht werden. Die Verfügbarkeit der erzeugten Energie beträgt im Inselbetrieb 100% bei einer konstanten Mindestleistung.

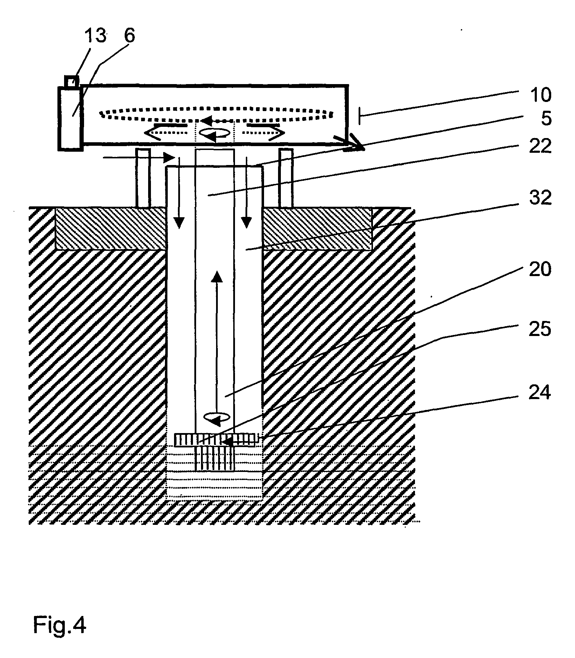

Ein weiteres Anwendungsgebiet der erfindungsgemäßen Verfahren ist in Fig. 4 dargestellt. Um das Problem der wirtschaftlichen Wasserförderung aus größeren Tiefen ohne bekannte Pumpenanlagen zu lösen, wird das natürlich Prinzip einer Wasserhose technisch nachgebildet. Oberirdisch ist das Expansionsmodul 10 angeordnet. Das Leistungsmodul 1 wird in modifizierter Form in einem Hüllrohr 23 mit der Ansaugöffnung 5 und dem Arbeitsspeicher als Schwimmkörpermodul 24 ausgebildet. Die Fördereinrichtung 13 erzeugt in der Atmosphäre eine Quelle 6, so dass rückwirkend über das Saugrohr 22, das Schwimmkörpermodul 24 und über das Hüllrohr 32 über der Ansaugöffnung 5 eine Senke entsteht. Im Schwimmkörpermodul 24 wird durch tangentiale Einströmung ein Potentialwirbel über der Wasseroberfläche ausgebildet und Arbeit gespeichert. Im Saugrohr 22 steigt der Wirbelkern 20 zum Expansionmodul 10 auf und führt an der Grenzschicht einen Wasserfilm mit. Wasser wird im Expansionsmodul 10 abgeschieden und fortgeleitet. Eine kontinuierliche Wasserförderung mit geringem Energieaufwand wird nach der Erfindung möglich. Verschleißteile und Wartungsaufwand sind reduziert. Zur Erhöhung der Wirtschaftlichkeit kann das Verfahren mit dem Verfahren zur Nutzung von Windenergie nach Fig. 3 kombiniert werden.

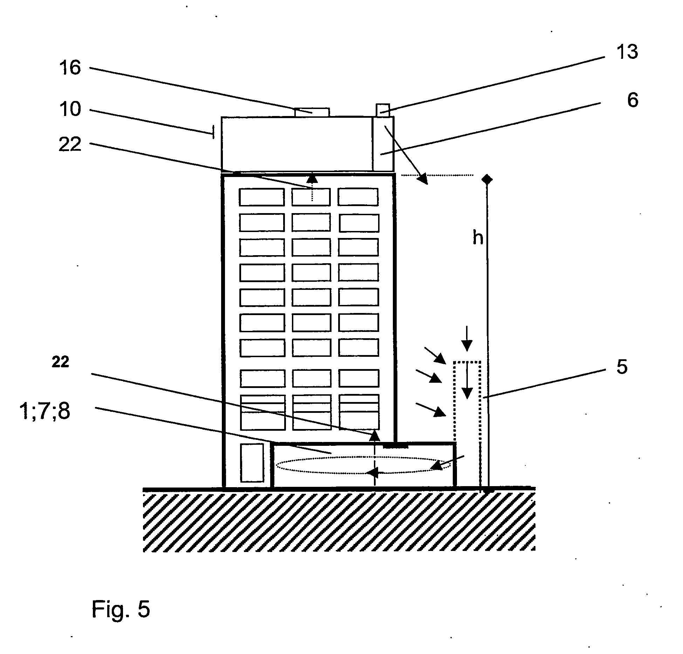

Wie in Fig. 5 schematisch dargestellt, kann das erfindungsgemäße Verfahren wirtschaftlich vorteilhaft auch auf Hochbauten angewendet werden. Ein Expansionsmodul 10 mit Ventil 16, Fördereinrichtung 13 und Quelle 6 wird auf dem Dach eines Hochbaukörpers angeordnet. Ein Saugrohr 22 wird als Schacht im Hochbaukörper ausgeführt. Ein Leistungsmodul 1 wird mit Generator 7 und Turbine 8 im Erdgeschoß integriert. Auch eine unterirdische Anordnung oder ein separates Bauwerk neben dem Hochbaukörper kann sinnvoll sein. Werden Fördereinrichtung 13 und Quelle 6 in Betrieb genommen, wird nach dem erfindungsgemäßen Verfahren eine Senke über der Ansaugfläche 5 erzeugt sowie ein Arbeitsspeicher im Leistungsmodul 1 generiert. Erfindungsgemäß entsteht der Vorteil, dass die strömungsmechanischen Widerstände im Saugrohr 22 durch paralleles Fliegen der Moleküle geringer werden. Prinzipiell ist deshalb jede Höhe h des Hochbaukörpers nutzbar. Je größer die Höhe h wird, je größer wird auch der zusätzlich nutzbare Druckunterschied zwischen Quelle 6 und Ansaugfläche 5. Wie bereits nach Fig. 3 erläutert, kann erfindungsgemäß eine Kombination mit Verfahren zur Windenergienutzung erfolgen, in dem ein Konzentrator 26 mit Wirbeltriebwerk 29 auf dem Expansionsmodul 10 wie vorbeschrieben angeordnet und betrieben wird. Bei Nachrüstung der Vorrichtungen auf vorhandenen Hochbaukörpern werden Saugrohre 22 zweckmäßig an der Außenwand verlegt. Hochbaukörper können auch als Rohrmasten ausgeführt sei, wobei der Rohrmast die Funktion eines Tragwerkes sowie eines Saugrohres 22 übernimmt.

Es können größere Leistungen installiert werden, die mindestens die Eigenversorgung der Hochbaukörper sichern. Durch die Nutzung von Windenergie kann die Wirtschaftlichkeit standortbedingt erhöht werden. Mit strömungsmechanisch sinnvoller Anwendung der erfindungsgemäßen Verfahren können keinerlei Umweltbeeinträchtigungen produziert werden.

### Aufstellung der verwendeten Bezugszeichen

- 1 =: Leistungsmodul
- 2 =: Hohlzylinder
- 3 =: Grundplatte
- 4 =: Deckplatte
- 5 =: Ansaugöffnung
- 6 =: Quelle
- 7 =: Generator
- 8 =: Turbine
- 9 =: Durchströmöffnung
- 10 =: Expansionsmodul
- 11 =: Ausströmöffnung
- 12 =: Quellstromkanal
- 13 =: Fördereinrichtung
- 14 =: Quellstrom
- 15 =: Wand
- 16 =: Ventil
- 17 =: Deckplatte
- 18 =: Turbinenkörper
- 19 =: dynamischer Schraubenwirbel
- 20 =: Wirbelkern
- 21 =: Arbeitsspeicher
- 22 =: Saugrohr
23 =
- 24 =: Schwimmkörpermodul
- 25 =: Ansaugöffnung
- 26 =: Konzentrator
- 27 =: Transformator
- 28 =: stationärer Schraubenwirbel
- 29 =: Wirbeltriebwerk
- 30 =: Drehkranz
31 =
- 32 =: Hüllrohr

## Patentansprüche

1. Verfahren zur Fluidkraftnutzung in einem newtonschen Fluid, wobei
in dem newtonschen Fluid und an Strömungsmodulen mindestens eine Quelle und eine Senke erzeugt wird, **dadurch gekennzeichnet, dass**
- in den Strömungsmodulen zur Erzeugung nutzbarer Energie strömungsmechanisch rotierende Durchflutungen generiert und in einem Kreisprozess betrieben werden,
- die strömungsmechanisch rotierende Durchflutung aus einer Senkenströmung einen als Arbeitsspeicher und zugleich als Drehfeld für eine Turbine nutzbaren, geschwindigkeitskonzentrierenden Potentialwirbel herstellt, den Wirbelkern des Potentialwirbels in einen expandieren Wirbel überführt und den eingetragenen Drehimpuls austrägt,
- innerhalb des rotierenden Arbeitsspeichers eine Turbine in einem Drehfeld angetrieben wird,
- aus einer Differenzgeschwindigkeit zwischen Turbine und Drehfeld Wirbelröhren generiert werden, die zum Wirbelkern des Drehfeldes geleitet einen mehrgängigen Schraubenwirbel herstellen, Zusatzgeschwindigkeiten induzieren und einen zusätzlichen Axialstrom hervorrufen, der als zusätzliche Quelle in das Fluid abfließt.

2. Verfahren nach Anspruch 1,
**dadurch gekennzeichnet, dass**
der mehrgängige Schraubenwirbel eine zusätzliche Quelle herstellt und über ein Saugrohr einen Axialstrom und zugleich eine Senkenströmung in den Strömungsmodulen verstärkt.

3. Verfahren nach Anspruch 1,
**dadurch gekennzeichnet, dass** eine oder mehrere Quellen auf einer Höhe h erzeugt und die Strömungsmodule über Saugrohre gekoppelt betrieben werden.

4. Vorrichtung zur Fluidkraftnutzung in einem newtonschen Fluid unter Verwendung hohlzylinderartiger Strömungsmodule,
**gekennzeichnet durch** folgende Merkmale:
4.1 die Strömungsmodule bestehen aus einem Leistungsmodul (1) und einem Expansionsmodul (10),
4.2. das Leistungsmodul (1) besteht aus einem Hohlzylinder (2) mit Grundplatte (3) und Deckplatte (4), wobei in die Deckplatte (4) eine Ansaugöffnung (5) der entstehenden Senke tangential auf dem äußerem Radius angeordnet ist,
4.3 mittig im Leistungsmodul (1) ist ein Generator (7) angeordnet und auf dessen Welle eine Turbine befestigt,
4.4 das Expansionsmodul (10) ist mit einer mittig angeordneten, regelbaren Ausströmöffnung (11) auf der Deckplatte (4) angeordnet und
4.5 auf dem äußeren Radius des Expansionsmoduls (10) ist ein Quellstromkanal (12) im Bereich der darunter liegenden Ansaugöffnung des Leistungsmoduls (1) sowie eine Fördereinrichtung 13 angeordnet.

5. Vorrichtung nach Anspruch 4,
**dadurch gekennzeichnet, dass**
die Expansionsmodule (10) mittels Durchströmöffnungen (9) oder Saugrohren (22) mit den Leistungsmodulen (1;24) strömungsmechanisch verbunden sind.

6. Vorrichtung nach Anspruch 4,
**dadurch gekennzeichnet, dass**
die Expansionsmodule (10) mit Anlagen zur Windenergienutzung (26;27;28;29) und/oder Schwimmkörpermodulen (24) über Saugrohre (22) strömungsmechanisch verbunden sind.

7. Vorrichtung nach Anspruch 4,
**dadurch gekennzeichnet, dass**
die Expansionsmodule (10) auf Hochbaukörpern und die Leistungsmodule (1) oberirdisch im und/oder am Hochbaukörper oder unterirdisch angeordnet und mit Saugrohren (22) verbunden sind.

8. Vorrichtung nach Anspruch 4,
**dadurch gekennzeichnet, dass**
strömungsmechanisch belastete Flächen der Expansionsmodule (10) und Leistungsmodule (1) aus recycelbarem Glas ausgebildet sind.

## Claims

1. Method for using a fluidic force in a Newtonian fluid, wherein
at least one source and at least one drain are produced in the Newtonian fluid and on flow modules,
**characterized in that**
fluidic rotating flow-throughs are generated in the flow modules for generating useful energy and are operated in a cyclic process,
the fluidic rotating flow-through produces from a drain flow a velocity-concentrating potential vortex which can be used as a working storage and simultaneously as a rotating field for a turbine, which transforms the vortex core of the potential vortex into an expanding vortex, and which releases the applied angular momentum,
a turbine is driven in a rotating field inside the rotating working storage,
vortex tubes are generated from a velocity difference between the turbine and the rotating field, wherein the vortex tubes produce a multi-start helical vortex upon transfer to the vortex core of the rotating field, induce additional velocities and generate an additional axial flow which flows into the fluid as an additional source.

2. Method according to claim 1,
**characterized in that**
the multi-start helical vortex produces an additional source and amplifies an axial flow via a suction tube and simultaneously a drain flow in the flow modules.

3. Method according to claim 1,
**characterized in that**
one or more sources are generated at a height h and the flow modules are operated while coupled via suction tubes.

4. Device for using a fluidic force in a Newtonian fluid by employing hollow-cylinder-like flow modules,
**characterized by the following features:**
4.1 the flow modules comprise a power module (1) and an expansion module (10),
4.2 the power module (1) comprises a hollow cylinder (2) with a base plate (3) and a cover plate (4), wherein an intake opening (5) of the generated drain is disposed in the cover plate (4) tangentially on the outer radius,
4.3 a generator (7) is arranged in the center in the power module (1), with a turbine being secured on the shaft of the power module (1),
4.4 the expansion module (10) is arranged in the cover plate (4) with a controllable discharge opening (11) disposed in the center, and
4.5 a source flow channel (12) as well as a transport device (13) are arranged on the outer radius of the expansion module (10) in the region of the intake opening of the power module (1) located underneath.

5. Device according to claim 4,
**characterized in that**
the expansion modules (10) are fluidically connected to the power modules (1; 24) by way of flow-through openings (9) or suction tubes (22).

6. Device according to claim 4,
**characterized in that**
the expansion modules (10) are fluidically connected with installations for using wind power (26; 27; 28; 29) and/or with float modules (24) by way of suction tubes (22).

7. Device according to claim 4,
**characterized in that**
the expansion modules (10) are arranged on superstructure elements and the power modules (1) are arranged above-ground in and/or on the superstructure element or underground and are connected to suction tubes (22).

8. Device according to claim 4,
**characterized in that**
fluidically loaded surfaces of the expansion modules (10) and of the power modules (1) are made of recyclable glass.

## Revendications

1. Procédé d'exploitation d'une force fluidique dans un fluide newtonien, dans lequel
au moins une source et un puits sont générés dans le fluide newtonien et à des modules d'écoulement,
**caractérisé en ce que**
- pour produire de l'énergie exploitable, des écoulements tournant de façon fluide sont générés dans les modules d'écoulement et fonctionnent en un procès cyclique,
- l'écoulement tournant de façon fluide produit un tourbillon potentiel concentrant la vitesse et utilisable et en tant que réservoir de travail et en tant que champ magnétique rotatif pour une turbine, à partir d'un écoulement puits, transforme le coeur de tourbillon du tourbillon potentiel en tourbillon en expansion, et dégage le moment angulaire introduit,
- une turbine est entraînée dans un champ magnétique rotatif à l'intérieur du réservoir de travail tournant,
- des tubes tourbillonnaires sont générés à partir d'une vitesse différentielle entre la turbine et le champ magnétique rotatif, qui produisent un tourbillon hélicoïdal multiple s'ils sont conduits au coeur de tourbillon du champ magnétique rotatif, qui induisent des vitesses additionnelles, et qui génèrent un écoulement axial additionnel qui s'écoule dans le fluide en tant que source additionnelle.

2. Procédé selon la revendication 1,
**caractérisé en ce que**
le tourbillon hélicoïdal multiple produit une source additionnelle, et augmente un écoulement axial et simultanément un écoulement puits dans les modules d'écoulement, par un tuyau d'aspiration.

3. Procédé selon la revendication 1,
**caractérisé en ce qu'**
une ou plusieurs sources sont générées à une hauteur h, et que les modules d'écoulement fonctionnent en étant couplés par des tuyaux d'aspiration.

4. Dispositif d'exploitation d'une force fluidique dans un fluide newtonien en utilisant des modules d'écoulement de forme cylindrique creuse,
**caractérisé par** les caractéristiques suivantes :
4.1. les modules d'écoulement consistent en un module (1) de puissance et un module (10) d'extension,
4.2. le module (1) de puissance consiste en un cylindre (2) creux ayant une plaque (3) de base et une plaque (4) de couvercle, une ouverture (5) d'aspiration du puits résultant étant disposée tangentiellement sur le rayon extérieur dans la plaque (4) de couvercle.
4.3. un générateur (7) est disposé au centre dans le module (1) de puissance, une turbine étant fixée sur l'arbre du générateur (7),
4.4. le module (10) d'extension est disposé sur la plaque (4) de couvercle, avec une ouverture (11) de sortie réglable disposée au centre.
4.5. sur le rayon extérieur du module (10) d'extension, un canal (12) d'écoulement de source est disposé dans la zone de l'ouverture d'aspiration sous-jacente du module (1) d'extension, ainsi qu'un dispositif 13 de transport.

5. Dispositif selon la revendication 4,
**caractérisé en ce que**
les modules (10) d'extension sont reliés de façon fluide aux modules (1, 24) de puissance au moyen d'ouvertures (9) de passage ou au moyen de tuyaux (2) d'aspiration.

6. Dispositif selon la revendication 4,
**caractérisé en ce que**
les modules (10) d'extension sont reliés de façon fluide à des installations (26, 27, 28, 29) servant à l'exploitation d'énergie éolienne et/ou à des modules (24) de flottabilité, au moyen de tuyaux (22) d'aspiration.

7. Dispositif selon la revendication 4,
**caractérisé en ce que**
les modules (10) d'extension sont disposés sur des constructions de grande hauteur, et que les modules (1) de puissance sont disposés à la surface, dans la construction de grande hauteur et/ou à la construction de grande hauteur, ou sous la surface, et reliés à des tuyaux (22) d'aspiration.

8. Procédé selon la revendication 4,
**caractérisé en ce que**
les surfaces chargées de façon fluide des modules (10) d'extension et des modules (1) de puissance sont formées de verre recyclable.
